# FASCICULE DE BREVET EUROPEEN

(11) **EP 3 155 252 B1**
(45) Date de publication et mention de la délivrance du brevet: **04.04.2018**
(21) Numéro de dépôt: 15733812.0
(22) Date de dépôt: 05.06.2015
(51) Int. Cl.: F02K 1/12, F02K 1/72, F02K 1/76

(54) **INVERSEUR DE POUSSÉE POUR NACELLE DE TURBORÉACTEUR D'AÉRONEF**
SCHUBUMKEHRER FÜR GONDEL EINES FLUGZEUGTURBOFANS
THRUST REVERSER FOR NACELLE OF AIRCRAFT TURBOFAN

(30) Priorité: 16.06.2014 FR 1455494
(43) Date de publication de la demande: 19.04.2017
(73) Titulaire: Safran Nacelles, 76700 Gonfreville-l'Orcher (FR)
(72) Inventeur: GONIDEC, Patrick, F-31530 Bretx (FR); KERBLER, Olivier, F-92160 Antony (FR); HUE, Corentin, F-76600 Le Havre (FR); BOILEAU, Patrick, F-31170 Tournefeuille (FR)
(74) Mandataire: Gaillarde, Frédéric F. Ch.
(86) Numéro de dépôt international: PCT/FR2015/051500
(87) Numéro de publication internationale: WO 2015/193579

(56) Documents cités:
- FR-A1- 2 929 998
- FR-A1- 2 934 326
- FR-A1- 2 958 910
- FR-A1- 2 991 670
- US-A- 3 981 450

## Description

L'invention concerne l'accouplement d'un inverseur de poussée pour nacelle de turboréacteur d'aéronef avec une tuyère à section variable associée.

Un aéronef est mû par plusieurs turboréacteurs logés chacun dans une nacelle abritant un ensemble de dispositifs d'actionnement annexes liés à son fonctionnement et assurant diverses fonctions lorsque le turboréacteur est en fonctionnement ou à l'arrêt.

Ces dispositif d'actionnement annexes comprennent notamment un système mécanique d'inversion de poussée.

Une nacelle de turboréacteur présente généralement une structure sensiblement tubulaire comprenant une entrée d'air en amont du turboréacteur, une section médiane destinée à entourer une soufflante dudit turboréacteur, une section aval destinée à entourer la chambre de combustion du turboréacteur et intégrant éventuellement des moyens d'inversion de poussée, et est généralement terminée par une tuyère d'éjection dont la sortie est située en aval du turboréacteur.

Les nacelles modernes sont destinées à abriter un turboréacteur double flux apte à générer par l'intermédiaire des pâles de la soufflante en rotation un flux d'air chaud (flux primaire) et un flux d'air froid (flux secondaire) qui circule à l'extérieur du turboréacteur à travers un passage annulaire, également appelé veine, formé entre un carénage du turboréacteur et une paroi interne de la nacelle. Les deux flux d'air sont éjectés du turboréacteur par l'arrière de la nacelle.

Le rôle d'un inverseur de poussée est, lors de l'atterrissage d'un aéronef, d'améliorer la capacité de freinage de celui-ci en redirigeant vers l'avant au moins une partie de l'air éjecté du turboréacteur. Dans cette phase, l'inverseur obstrue au moins une partie de la veine du flux froid et dirige ce flux vers l'avant de la nacelle, générant de ce fait une contre-poussée qui vient s'ajouter au freinage des roues et aérofreins de l'avion.

De manière générale, la structure d'un inverseur comprend un capot d'inverseur déplaçable entre, d'une part, une position de jet inversé dans laquelle il ouvre dans la nacelle un passage destiné au flux d'air dévié, et d'autre part, une position de jet direct dans laquelle il ferme ce passage.

Dans le cas d'un inverseur à grilles de déviation, la réorientation du flux d'air est effectuée par des grilles de déviation, associées à des volets d'inversion venant bloquer au moins partiellement la veine de circulation d'air, le capot n'ayant qu'une simple fonction de coulissage visant à découvrir ou recouvrir ces grilles de déviation.

Les volets d'inversion, également appelés volets de blocage, quant à eux, sont activés et entraînés par le coulissement du capot mobile jusqu'à venir obstruer au moins partiellement la veine en aval des grilles, de manière à optimiser la réorientation du flux d'air froid.

De façon connue, les grilles de déviation sont montées sur un cadre avant servant de partie fixe du dispositif d'inversion de poussée et rattaché à un carter de la soufflante du turboréacteur. Ce cadre avant assure également le support de vérins d'actionnement des capots mobiles.

Outre participer à une fonction d'inversion de poussée, un capot mobile d'inverseur par son appartenance à la section arrière de la nacelle inclut de facto une partie aval formant tuyère d'éjection.

La section de la tuyère d'éjection peut être adaptée en fonction des différentes phases de vols, à savoir notamment décollage, montée, croisière, descente et atterrissage afin de toujours conserver une section optimale de tuyère en fonction du régime du turboréacteur. La tuyère sera alors appelée tuyère variable.

Une telle tuyère variable est associée à un système d'actionnement permettant cette variation de section.

Il existe plusieurs solutions pour réaliser une tuyère variable.

Une première solution est de prévoir des volets terminaux pivotants montés sur le capot mobile d'inverseur et dont le pivotement se traduit par une augmentation ou par une réduction de la section de sortie. Un tel système est décrit dans les documents FR 2 929 998 et FR 2 934 326 notamment.

On connaît également des panneaux montés mobile en translation à l'intérieur du capot mobile d'inverseur, de manière télescopique, dont le recul ou la rétractation entraîne de façon similaire l'augmentation ou la réduction de la section de sortie.

Dans la cadre d'un inverseur muni d'une tuyère à section varible, il est connu d'actionner le déploiement du capot mobile et le mécanisme de variation de la section de la tuyère variable par les mêmes vérins, le capot mobile et la tuyère variable étant accouplés et désacouplés par un dispositif d'accouplement.

Ce dispositif d'accouplement relie sélectivement le capot et la tuyère variable de manière rigide, la tuyère variable étant libre lorsque le capot est verrouillé sur la structure de l'inverseur dans sa position de jet direct, et la tuyère variable étant accouplée sur le capot lorsque le capot est déverrouillé, de sorte que la tuyère et le capot sont entraînés en déplacement simultanément.

Ce type de dispositif d'accouplement est généralement relativement complexe, il nécessite souvent un alignement de différentes pièces pour permettre l'accouplement du capot et de la tuyère variable.

Le nombre élevé de pièces de ce type de dispositif d'accouplement est source de panne et conduit souvent à une fiabilité moyenne.

De plus, les à-coups d'accouplement et de désaccouplement ne sont pas amortis et peuvent conduire à des contraintes pénalisantes en termes d'usure et de fiabilité des pièces mécaniques.

La présente invention vise notamment à résoudre ces inconvénients et se rapporte pour ce faire à un inverseur de poussée pour nacelle de turboréacteur d'aéronef comprenant au moins :
- un capot d'inversion de poussée mobile en translation suivant une direction sensiblement parallèle à un axe longitudinal de la nacelle, entre une position de jet direct et une position de jet inversé,
- une tuyère de sortie de section variable qui est agencée dans le prolongement aval dudit capot et qui est mobile entre au moins une position de section d'éjection réduite, une position de section d'éjection augmentée et une position neutre intermédiaire, et
- au moins un actionneur qui comprend un corps monté sur une structure fixe de l'inverseur et une tige d'actionnement, ladite tige étant adaptée pour entraîner en déplacement la tuyère variable et le capot mobile, caractérisé en ce que l'inverseur est équipé d'un coupleur élastique comportant :
   - un corps qui est solidaire du capot d'inversion de poussée,
   - des moyens de rappel élastique et de butées qui sont portés par le corps du coupleur et qui coopèrent avec la tige d'actionnement de l'actionneur pour rappeler élastiquement la tuyère dans sa position neutre, lesdits moyens de rappel et de butées étant tarés de sorte que, lorsque le capot est déverrouillé, les moyens de rappel et de butées s'opposent au déplacement relatif de la tige d'actionnement par rapport au capot, pour permettre l'entraînement en déplacement de l'ensemble constitué par le capot et la tuyère, et lorsque le capot est verrouillé, l'actionneur entraîne la tige d'actionnement à l'encontre des moyens de rappel, pour permettre l'entraînement en déplacement de la tuyère.

L'inverseur proposé par l'invention est plus simple, plus léger, plus compact et plus fiable que les inverseurs utilisant des verrouillages relatifs de la tuyère et du capot mobile d'inversion.

En effet, l'inverseur selon l'invention est dépourvu de moyens de commande, il ne nécessite aucun dispositif de synchronisation ou d'alignement du capot d'inversion de poussée et de la tuyère.

Selon une autre caractéristique, les moyens de rappel élastique et de butées sont tarés de sorte que la position neutre de la tuyère est sensiblement invariable, que le capot soit verrouillé sur la structure fixe de l'inverseur ou que le capot soit déverrouillé.

Cette caractéristique permet notamment de limiter les à-coups lors du passage du capot d'un état verrouillé à un état déverrouillé.

Le coupleur comporte :
- une cavité qui est formée par le corps du coupleur, qui présente une forme creuse s'étendant axialement globalement suivant l'axe de la tige d'actionnement et qui est délimitée radialement par une paroi amont radiale et par une paroi aval radiale,
- un piston qui est fixé sur la tige d'actionnement de l'actionneur et qui est monté coulissant dans le corps du coupleur en divisant ladite cavité en un premier compartiment et un second compartiment,
- un premier ressort et un second ressort, formant lesdits moyens de rappel élastique, qui sont interposés axialement entre la paroi amont du corps et le piston, et entre la paroi aval et le piston respectivement.

Le coupleur présente une conception simple et fiable qui permet de limiter la course de la tige d'actionnement et donc de protéger la tuyère contre des efforts trop importants transmis par la tige d'actionnement de l'actionneur.

Pour limiter les à-coups lors du passage du capot d'un état verrouillé à un état déverrouillé, l'inverseur comporte des moyens d'amortissement.

De plus, les moyens d'amortissement comportent un fluide d'amortissement qui rempli la cavité du corps du coupleur, le piston du coupleur présentant un canal permettant au fluide d'amortissement de circuler entre le premier compartiment et le second compartiment de la cavité au cours du déplacement du piston, pour amortir le déplacement de la tige d'actionnement.

Ce type d'amortissement offre une solution simple et peu encombrante pour amortir efficacement les mouvements de la tige d'actionnement.

De préférence, les moyens d'amortissement sont conçus pour présenter une constante de temps voisine de la durée nécessaire pour faire passer la tuyère de sa position de section d'éjection réduite à sa position de section d'éjection augmentée, ladite constante étant supérieure à la durée de déploiement du capot mobile de l'inverseur de poussée.

Cette caractéristique permet également de minimiser les à-coups transmis à la tuyère lors du déplacement de la tige d'actionnement.

Selon un autre aspect, la tige d'actionnement comporte un premier tronçon qui est monté coulissant dans le corps de l'actionneur et un second tronçon qui porte le piston du coupleur, lesdits tronçons étant reliés entre eux par une liaison mécanique permettant un désaxage sensible du premier tronçon et du second tronçon de la tige d'actionnement.

La liaison mécanique est conçue pour permettre un désaccouplement du premier tronçon et du second tronçon de la tige d'actionnement.

De préférence, la liaison mécanique comporte une tête de section elliptique qui est reliée sur une extrémité libre du premier tronçon de la tige, et une attache de forme en U qui est reliée sur une extrémité libre du second tronçon de la tige et qui coopère avec ladite tête associée pour permettre un déplacement relatif de la tête et de l'attache et pour permettre un désaccouplement du premier tronçon et du second tronçon de la tige d'actionnement.

L'invention concerne aussi une nacelle de turboréacteur d'aéronef équipée d'un inverseur selon l'une quelconque des revendications précédentes.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective, qui illustre une nacelle de turboréacteur équipée d'un inverseur de poussée et d'une tuyère variable ;
- la figure 2 est une vue schématique en section longitudinale, qui illustre le capot mobile de l'inverseur de poussée en position de jet direct et le coupleur élastique selon l'invention ;
- la figure 3 est une vue schématique en section longitudinale, qui illustre le capot mobile de l'inverseur de poussée en position de jet inversé et le coupleur élastique selon l'invention ;
- la figure 4 est une vue schématique de détail en section longitudinale, qui illustre le coupleur de la figure 2 dans une position correspondant à une position de section d'éjection augmentée de la tuyère ;
- la figure 5 est une vue schématique de détail en section longitudinale, qui illustre le coupleur de la figure 2 dans une position correspondant à une position de section d'éjection neutre de la tuyère ;
- la figure 6 est une vue schématique de détail en section longitudinale, qui illustre le coupleur de la figure 2 dans une position correspondant à une position de section d'éjection réduite de la tuyère ;
- la figure 7 est une vue schématique de détail en section longitudinale, qui illustre la liaison mécanique permettant un désaxage sensible du premier tronçon et du second tronçon de la tige d'actionnement.

Dans la description et les revendications, on utilisera à titre non limitatif la terminologie longitudinal, vertical et transversal en référence au trièdre L, V, T indiqué aux figures, dont l'axe L est parallèle à l'axe de la nacelle.

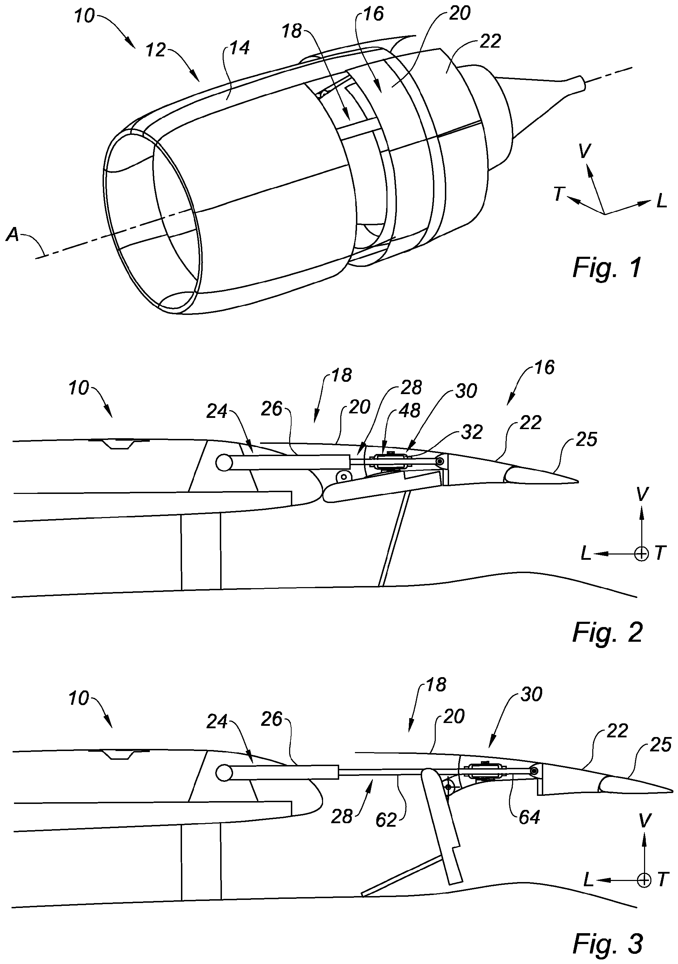

A noter que dans la présente demande de brevet, les termes « amont » et «aval » doivent s'entendre par rapport à la circulation du flux d'air à l'intérieur de l'ensemble propulsif formé par la nacelle et le turboréacteur, c'est-à-dire de la gauche vers la droite des figures 1 à 7.

Sur l'ensemble de ces figures, des références identiques ou analogues représentent des organes ou ensembles d'organes identiques ou analogues.

On a représenté à la figure 1 une nacelle 10 de turboréacteur pour aéronef, qui s'étend axialement suivant un axe A longitudinal.

La nacelle 10 comporte une partie avant 12 fixe qui comporte une poutraison 14 centrale de fixation sur l'aéronef, et une partie arrière 16 mobile.

La partie arrière 16 mobile comporte un inverseur 18 de poussée qui comprend un capot 20 d'inversion de poussée et une tuyère 22 d'éjection de section variable agencée dans le prolongement aval du capot 20.

Le capot 20 d'inversion de poussée est monté mobile en translation suivant une direction sensiblement parallèle à l'axe A longitudinal de la nacelle 10, entre une position de jet direct représentée à la figure 2, dans laquelle le capot 20 ouvre dans la nacelle 10 un passage destiné au flux d'air dévié, et une position de jet inversé représentée à la figure 3 dans laquelle le capot 20 ferme le passage.

L'inverseur 18 de poussée est équipé de moyens de déviation (non représentés) du flux d'air qui sont par exemple du type à grille fixe ou du type à grille mobile.

Le capot 20 est entraîné en déplacement au moyen d'une pluralité de vérin 24 dont un seul est décrit par la suite et représenté sur les figures.

De plus, le capot 20 est associé à un moyen de verrouillage (non représenté) permettant d'immobiliser le capot 20 dans sa position de jet direct et de libérer le capot 20, sélectivement.

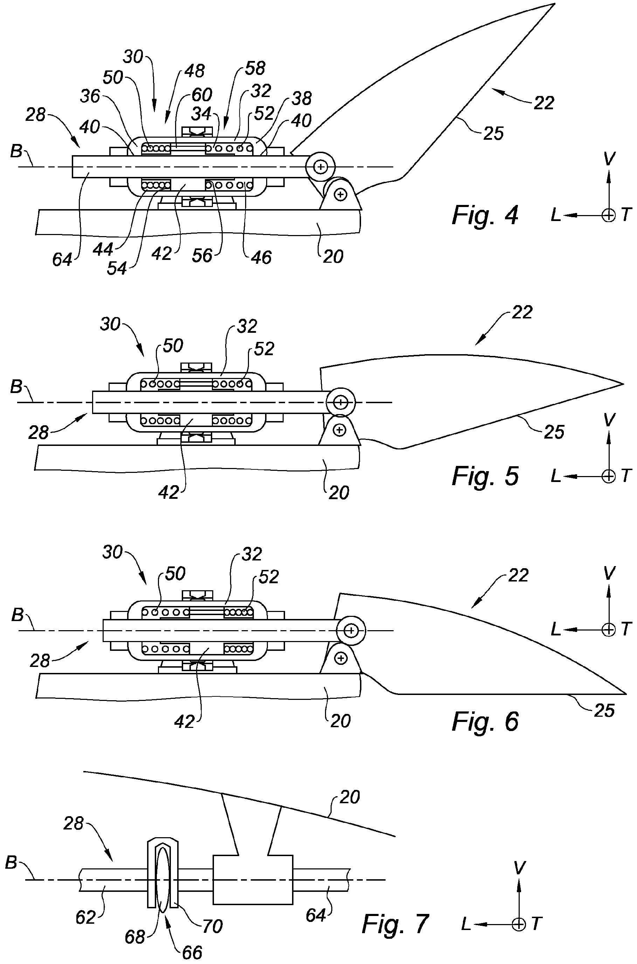

La tuyère 22 de sortie de section variable est montée mobile sur la structure fixe de l'inverseur 18 entre au moins une position de section d'éjection réduite illustrée à la figure 6, une position de section d'éjection augmentée illustrée à la figure 4 et une position neutre intermédiaire illustrée à la figure 5.

Chacune des positions de la tuyère 18 correspond ici à une inclinaison distincte des volets 25 (dont un seul est représenté sur les figures) qui sont montés pivotants sur la structure fixe de l'inverseur 18 de poussée pour faire varier le section d'éjection de la tuyère 18.

A cet effet, le vérin 24 comporte un corps 26 monté sur la structure fixe de l'inverseur 18 et une tige 28 d'actionnement qui est adaptée pour entraîner en déplacement sélectivement la tuyère 22 variable ou l'ensemble constitué par la tuyère 22 variable et le capot 20 mobile.

Dans ce but, l'inverseur 18 de poussée est équipé d'un coupleur 30 élastique, représenté en détail aux figures 4 à 6, qui comporte un corps 32 fixé sur le capot 20 d'inversion de poussée.

Le corps 32 du coupleur 30 délimite une cavité 34 présentant une forme creuse cylindrique qui s'étend axialement suivant un axe B parallèle à l'axe de la tige 28 d'actionnement du vérin 24.

La cavité 34 est délimitée radialement par une paroi amont 36 radiale et par une paroi aval 38 radiale opposées qui sont chacune percées d'un trou de passage 40 suivant l'axe B.

De plus, le coupleur 30 comporte un piston 42 qui est fixé sur la tige 28 d'actionnement et qui est monté coulissant dans le corps 32 du coupleur 30, à travers les trous de passage 40 prévu à cet effet, en divisant la cavité 34 en un premier compartiment amont 44 et en un second compartiment aval 46.

Aussi, le coupleur 30 est équipé de moyens de rappel 48 élastique et de butées qui sont constitués d'un premier ressort 50 hélicoïdal et d'un second ressort 52 hélicoïdal.

Le premier ressort 50 est interposé axialement entre la paroi amont 36 du corps 32 et un premier siège 54 annulaire formé par le piston 42, et de façon symétrique, le second ressort 52 est interposé axialement entre la paroi aval 38 du corps 32 et un second siège 56 annulaire formé par le piston 42.

Les moyens de rappel 48 agissent sur la tige 28 d'actionnement par l'intermédiaire du piston 42 et du corps 32 du coupleur 30 pour rappeler élastiquement la tige 28 d'actionnement vers une position neutre.

Plus particulièrement, les moyens de rappel 48 sont tarés de sorte que, lorsque le capot 20 est déverrouillé, les moyens de rappel 48 s'opposent au déplacement relatif de la tige 28 d'actionnement par rapport au capot 20, pour permettre l'entraînement en déplacement de l'ensemble constitué par le capot 20 et la tuyère 22.

A l'inverse, lorsque le capot 20 est verrouillé, le vérin 24 entraîne la tige 28 d'actionnement à l'encontre des moyens de rappel 48, pour permettre l'entraînement en déplacement de la tuyère 22.

La figure 5 illustre le comportement du coupleur 30 lorsque le capot 20 de l'inverseur 18 de poussée est déverrouillé et mobile en translation.

Selon la figure 5, les moyens de rappel 48 agissent de concert pour positionner le piston 42 dans une position globalement centrale qui correspond à la position neutre de la tuyère 22.

On notera que la position neutre de la tuyère 22 dépend du tarage respectif du premier ressort 50 et du second ressort 52 formant les moyens de rappel 48.

De plus, les moyens de rappel 48 sont suffisamment tarés pour transmettre le mouvement de la tige 28 d'actionnement à l'ensemble constitué par le capot 20 mobile et la tuyère 22.

Les figures 4 et 6 illustrent le comportement du coupleur 30 lorsque le capot 20 de l'inverseur 18 de poussée est verrouillé sur la structure fixe de l'inverseur 18.

En référence à la figure 4, le vérin 24 tire la tige 28 d'actionnement pour entraîner en mouvement la tuyère 22 vers sa position de section d'éjection augmentée.

A l'inverse, en référence à la figure 6, le vérin 24 pousse la tige 28 d'actionnement pour entraîner en mouvement la tuyère 22 vers sa position de section d'éjection réduite.

On remarquera que la course de la tige 28 d'actionnement est limitée par le piston 42 du coupleur 30 qui est conçu pour venir en butée axiale sur la paroi amont 36 et la paroi aval 38 du corps 32 du coupleur 30, ce qui permet de limiter les efforts appliqués sur la tuyère 22 par le vérin 24.

Avantageusement, les moyens de rappel 48 élastiques sont tarés de sorte que la position neutre de la tuyère 22 est sensiblement invariable, que le capot 20 soit verrouillé sur la structure fixe de l'inverseur, ou que le capot 20 soit déverrouillé.

On notera que la position neutre de la tuyère 22 dépend du tarage respectif du premier ressort 50 et du second ressort 52 formant les moyens de rappel 48 ainsi que des efforts aérodynamiques exercés sur la tuyère 22.

Selon le type de tuyère 22, il est possible de régler le tarage des moyens de rappel 48 pour que la contrainte exercée par les moyens de rappel 48 sur la tige d'actionnement soit largement supérieure à la résultante des efforts aérodynamiques exercés sur la tuyère 22, de sorte que la position neutre de la tuyère 22 soit sensiblement invariable et corresponde à l'équilibre entre le premier ressort 50 et le second ressort 52, quelles que soient les situations de vol.

Selon un autre aspect de l'invention, le coupleur 30 comporte des moyens d'amortissement 58 qui sont conçus pour limiter les à-coups transmis au capot 20 et à la tuyère 22 par la tige 28 d'actionnement, notamment lors du déverrouillage du capot 20.

En effet, le déverrouillage du capot 20 provoque un changement brusque de la répartition des efforts entre le capot 20 et la tuyère 22.

Les moyens d'amortissement 58 comportent un fluide d'amortissement qui rempli la cavité 34 du corps 32 du coupleur 30, le piston 42 du coupleur 30 présentant un canal 60 permettant au fluide d'amortissement de circuler entre le premier compartiment 44 et le second compartiment 46 de la cavité 34 au cours du déplacement du piston 42, pour freiner et amortir le déplacement de la tige 28 d'actionnement.

Les moyens d'amortissement 58 sont conçus pour présenter une constante de temps d'amortissement voisine de la durée nécessaire pour faire passer la tuyère 22 de sa position de section d'éjection réduite à sa position de section d'éjection augmentée, cette constante de temps étant supérieure à la durée de déploiement du capot 20 mobile de l'inverseur 18 de poussée.

En effet, le temps moyen de déploiement du capot 20 depuis sa position de jet direct, jusqu'à sa position de jet inversé, avoisine deux secondes, alors que le temps moyen nécessaire pour faire passer la tuyère 22 de sa position de section d'éjection réduite à sa position de section d'éjection augmentée est largement supérieur.

Ainsi, la tuyère 22 conservera sensiblement la même position angulaire entre le début et la fin de la course du capot 20 depuis sa position de jet direct jusqu'à sa position de jet inversé.

Une solution alternative pour éviter les à-coups transmis à la tuyère 22 est d'adapter l'amortissement pour que la tuyère 22 se referme légèrement au début de la course du capot 20, de l'ordre de vingt à trente pourcent de sa capacité.

Selon un autre aspect, la tige 28 d'actionnement comporte un premier tronçon 62 qui est monté coulissant dans le corps 26 du vérin 24 et un second tronçon 64 qui est monté coulissant dans le corps 32 du coupleur 30.

Comme on peut le voir à la figure 7, le premier tronçon 62 et le second tronçon 64 sont reliés entre eux par une liaison mécanique 66 permettant un désaxage sensible et un désaccouplement du premier tronçon 64 et du second tronçon 66 de la tige 28 d'actionnement.

Dans ce but, la liaison mécanique 66 comporte une tête 68 de section elliptique qui est reliée sur une extrémité libre du premier tronçon 62 de la tige 28 d'actionnement, et une attache 70 qui est reliée sur une extrémité libre du second tronçon 64 de la tige 28 d'actionnement.

L'attache 70 comprend un logement de forme en U dans lequel la tête 68 est agencée, pour permettre un déplacement radial relatif de la tête 68 et de l'attache 70.

Ainsi, la liaison mécanique 66 permet de dissocier l'attache 70 de la tête 68 permettant ainsi une deconnexion premier tronçon 64 et du second tronçon 66 de la tige 28 d'actionnement lors de l'ouverture du capot 20 en configuration de maintenance.

## Revendications

1. Inverseur (18) de poussée pour nacelle (10) de turboréacteur d'aéronef comprenant au moins :
- un capot (20) d'inversion de poussée mobile en translation suivant une direction sensiblement parallèle à un axe (A) longitudinal de la nacelle (10), entre une position de jet direct et une position de jet inversé, le capot (20) étant associé à un moyen de verrouillage permettant d'immobiliser le capot (20) dans sa position de jet direct,
- une tuyère (22) de sortie de section variable qui est agencée dans le prolongement aval dudit capot (20) et qui est mobile entre au moins une position de section d'éjection réduite, une position de section d'éjection augmentée et une position neutre intermédiaire, et
- au moins un actionneur (24) qui comprend un corps (26) monté sur une structure fixe de l'inverseur (18) et une tige (28) d'actionnement, ladite tige (28) étant adaptée pour entraîner en déplacement la tuyère (22) variable et le capot (20) mobile, **caractérisé en ce que** l'inverseur (18) est équipé d'un coupleur (30) élastique comportant :
- un corps (32) qui est solidaire du capot (20) d'inversion de poussée, et
- des moyens de rappel (48) élastique et de butées qui sont portés par le corps (32) du coupleur (30) et qui coopèrent avec la tige (28) d'actionnement de l'actionneur (24) pour rappeler élastiquement la tuyère (22) dans sa position neutre, lesdits moyens de rappel (48) étant tarés de sorte que, lorsque le capot (20) est déverrouillé, les moyens de rappel (48) et de butées s'opposent au déplacement relatif de la tige (28) d'actionnement par rapport au capot (20) pour permettre l'entraînement en déplacement de l'ensemble constitué par le capot (20) et la tuyère (22), et lorsque le capot (20) est verrouillé, l'actionneur (24) entraîne la tige (28) d'actionnement à l'encontre des moyens de rappel (48) et de butées pour permettre l'entraînement en déplacement de la tuyère (22).

2. Inverseur (18) de poussée selon la revendication 1, **caractérisé en ce que** les moyens de rappel (48) élastique et de butées sont tarés de sorte que la position neutre de la tuyère (22) est sensiblement invariable, que le capot (20) soit verrouillé sur la structure fixe de l'inverseur (18) ou que le capot (20) soit déverrouillé.

3. Inverseur (18) de poussée selon l'une quelconque des revendications précédentes, **caractérisé en ce que** le coupleur (30) comporte :
- une cavité (34) qui est formée par le corps (32) du coupleur (30), qui présente une forme creuse s'étendant axialement globalement suivant l'axe (B) de la tige (28) d'actionnement et qui est délimitée radialement par une paroi amont (36) radiale et par une paroi aval (38) radiale,
- un piston (42) qui est fixé sur la tige (28) d'actionnement de l'actionneur (24) et qui est monté coulissant dans le corps (32) du coupleur (30) en divisant ladite cavité (34) en un premier compartiment (44) et un second compartiment (46),
- un premier ressort (50) et un second ressort (52), formant lesdits moyens de rappel (48) élastique et de butées, qui sont interposés axialement entre la paroi amont (36) du corps (32) et le piston (42), et entre la paroi aval (38) et le piston (42) respectivement.

4. Inverseur (18) de poussée selon l'une quelconque des revendications précédentes, **caractérisé en ce que** il comporte des moyens d'amortissement (58) conçus pour limiter les à-coups transmis au capot (20) et à la tuyère (22) lors du déverrouillage du capot (20).

5. Inverseur (18) de poussée selon la revendication 4, **caractérisé en ce que** les moyens d'amortissement (58) comportent un fluide d'amortissement qui rempli la cavité (34) du corps (32) du coupleur (30), le piston (42) du coupleur (30) présentant un canal (60) permettant au fluide d'amortissement de circuler entre le premier compartiment (44) et le second compartiment (46) de la cavité (34) au cours du déplacement du piston (42), pour amortir le déplacement de la tige (28) d'actionnement.

6. Inverseur (18) de poussée selon l'une quelconque des revendications 4 et 5, **caractérisé en ce que** les moyens d'amortissement (58) sont conçus pour présenter une constante de temps voisine de la durée nécessaire pour faire passer la tuyère (22) de sa position de section d'éjection réduite à sa position de section d'éjection augmentée, ladite constante étant supérieure à la durée de déploiement du capot (20) mobile de l'inverseur (18) de poussée.

7. Inverseur (18) de poussée selon la revendication 3, **caractérisé en ce que** la tige (28) d'actionnement comporte un premier tronçon (62) qui est monté coulissant dans le corps (26) de l'actionneur (24) et un second tronçon (64) qui porte le piston (42) du coupleur (30), lesdits tronçons étant reliés entre eux par une liaison mécanique (66) permettant un désaxage sensible du premier tronçon (62) et du second tronçon (64) de la tige (28) d'actionnement.

8. Inverseur (18) de poussée selon la revendication 7, **caractérisé en ce que** la liaison mécanique (66) est conçue pour permettre un désaccouplement du premier tronçon (62) et du second tronçon (64) de la tige (28) d'actionnement.

9. Inverseur (18) de poussée selon l'une quelconques des revendications 7 et 8, **caractérisé en ce que** la liaison mécanique (66) comporte une tête (68) de section elliptique qui est reliée sur une extrémité libre du premier tronçon (62) de la tige (28), et une attache (70) de forme en U qui est reliée sur une extrémité libre du second tronçon (64) de la tige (28) et qui coopère avec ladite tête (68) associée pour permettre un déplacement relatif de la tête (68) et de l'attache (70) et pour permettre un désaccouplement du premier tronçon (62) et du second tronçon (64) de la tige (28) d'actionnement.

10. Nacelle (10) de turboréacteur d'aéronef équipée d'un inverseur (18) selon l'une quelconque des revendications précédentes.

## Patentansprüche

1. Schubumkehrer (18) für eine Flugzeug-Triebwerksgondel (10), umfassend mindestens:
- eine Schubumkehrabdeckung (20), die gemäß einer im Wesentlichen zu einer Längsachse (A) der Gondel (10) parallelen Richtung zwischen einer Direktstrahl-Stellung und einer Umkehrstrahl-Stellung translationsbeweglich ist, wobei die Abdeckung (20) einem Verriegelungsmittel zugeordnet ist, das es ermöglicht, die Abdeckung (20) in ihrer Direktstrahl-Stellung zu immobilisieren,
- eine Auslassdüse (22) von variablem Querschnitt, die in der stromabwärtigen Verlängerung der Abdeckung (20) angeordnet ist und die zwischen mindestens einer Stellung von verringertem Ausströmquerschnitt, einer Stellung von erhöhtem Ausströmquerschnitt, und einer neutralen Zwischenstellung beweglich ist, und
- mindestens einen Aktor (24), der einen an einer festen Struktur des Umkehrers (18) montierten Körper (26) und eine Betätigungsstange (28) umfasst, wobei die Stange (28) dafür ausgebildet ist, die variable Düse (22) und die bewegliche Abdeckung (20) in Verschiebung anzutreiben, **dadurch gekennzeichnet, dass** der Umkehrer (18) mit einer elastischen Kopplung (30) ausgestattet ist, umfassend:
- einen Körper (32), der fest mit der Schubumkehrabdeckung (20) verbunden ist, und
- elastische Rückstellmittel (48) und Anschlagmittel, die vom Körper (32) der Kopplung (30) getragen werden und die mit der Betätigungsstange (28) des Aktors (24) zusammenwirken, um die Düse (22) elastisch in ihre Neutralstellung zurückzustellen, wobei die Rückstellmittel (48) derart tariert sind, dass wenn die Abdeckung (20) entriegelt ist, die Rückstellmittel (48) und Anschlagmittel sich der relativen Verschiebung der Betätigungsstange (28) in Bezug auf die Abdeckung (20) entgegenstellen, um den Verschiebeantrieb der aus der Abdeckung (20) und der Düse (22) bestehenden Baugruppe zu ermöglichen, und wenn die Abdeckung (20) verriegelt ist, der Aktor (24) die Betätigungsstange (28) entgegen den Rückstellmitteln (48) und Anschlagmitteln antreibt, um den Verschiebeantrieb der Düse (22) zu ermöglichen.

2. Schubumkehrer (18) nach Anspruch 1, **dadurch gekennzeichnet, dass** die elastischen Rückstellmittel (48) und Anschlagmittel derart tariert sind, dass die Neutralstellung der Düse (22) im Wesentlichen invariabel ist, unabhängig davon, ob die Abdeckung (20) an der festen Struktur des Umkehrers (18) verriegelt ist oder die Abdeckung (20) entriegelt ist.

3. Schubumkehrer (18) nach einem der vorstehenden Ansprüche, **dadurch gekennzeichnet, dass** die Kopplung (30) umfasst:
- einen Hohlraum (34), der vom Körper (32) der Kopplung (30) gebildet wird, der eine Hohlform aufweist, die sich axial im Allgemeinen gemäß der Achse (B) der Betätigungsstange (28) erstreckt und die radial von einer radialen stromaufwärtigen Wand (36) und von einer radialen stromabwärtigen Wand (38) begrenzt wird,
- einen Kolben (42), der an der Betätigungsstange (28) des Aktors (24) befestigt ist und der im Körper (32) der Kopplung (30), unter Unterteilung des Hohlraums (34) in ein erstes Fach (44) und ein zweites Fach (46), gleitend montiert ist,
- eine erste Feder (50) und eine zweite Feder (52), die die elastischen Rückstellmittel (48) und Anschlagmittel bilden, die axial jeweils zwischen der stromaufwärtigen Wand (36) des Körpers (32) und dem Kolben (42), und zwischen der stromabwärtigen Wand (38) und dem Kolben (42) zwischengefügt sind.

4. Schubumkehrer (18) nach einem der vorstehenden Ansprüche, **dadurch gekennzeichnet, dass** er Dämpfungsmittel (58) umfasst, die dafür konzipiert sind, die beim Entriegeln der Abdeckung (20) auf die Abdeckung (20) und auf die Düse (22) übertragenen Erschütterungen zu begrenzen.

5. Schubumkehrer (18) nach Anspruch 4, **dadurch gekennzeichnet, dass** die Dämpfungsmittel (58) ein Dämpfungsfluid umfassen, das den Hohlraum (34) des Körpers (32) der Kopplung (30) füllt, wobei der Kolben (42) der Kopplung (30) einen Kanal (60) aufweist, der es dem Dämpfungsfluid ermöglicht, während der Verschiebung des Kolbens (42) zwischen dem ersten Fach (44) und dem zweiten Fach (46) des Hohlraums (34) zu zirkulieren, um die Verschiebung der Betätigungsstange (28) zu dämpfen.

6. Schubumkehrer (18) nach einem der Ansprüche 4 und 5, **dadurch gekennzeichnet, dass** die Dämpfungsmittel (58) dafür konzipiert sind, eine Zeitkonstante nahe der Dauer aufzuweisen, die erforderlich ist, um die Düse (22) aus ihrer Stellung von verringertem Ausströmquerschnitt in ihre Stellung von erhöhtem Ausströmquerschnitt zu bringen, wobei die Konstante größer ist als die Verfahrdauer der beweglichen Abdeckung (20) des Schubumkehrers (18).

7. Schubumkehrer (18) nach Anspruch 3, **dadurch gekennzeichnet, dass** die Betätigungsstange (28) einen ersten Abschnitt (62) umfasst, der im Körper (26) des Aktors (24) gleitend montiert ist, und einen zweiten Abschnitt (64), der den Kolben (42) der Kopplung (30) trägt, wobei die Abschnitte über eine mechanische Verbindung (66) miteinander verbunden sind, die eine erhebliche Achsenabweichung des ersten Abschnitts (62) und des zweiten Abschnitts (64) der Betätigungsstange (28) ermöglicht.

8. Schubumkehrer (18) nach Anspruch 7, **dadurch gekennzeichnet, dass** die mechanische Verbindung (66) dafür konzipiert ist, ein Entkoppeln des ersten Abschnitts (62) und des zweiten Abschnitts (64) der Betätigungsstange (28) zu ermöglichen.

9. Schubumkehrer (18) nach einem der Ansprüche 7 und 8, **dadurch gekennzeichnet, dass** die mechanische Verbindung (66) einen Kopf (68) von elliptischem Querschnitt umfasst, der auf einem freien Ende des ersten Abschnitts (62) der Stange (28) verbunden ist, und eine U-förmige Klammer (70), die auf einem freien Ende des zweiten Abschnitts (64) der Stange (28) verbunden ist und die mit dem zugeordneten Kopf (68) zusammenwirkt, um eine relative Verschiebung des Kopfs (68) und der Klammer (70) zu ermöglichen und um ein Entkoppeln des ersten Abschnitts (62) und des zweiten Abschnitts (64) der Betätigungsstange (28) zu ermöglichen.

10. Flugzeug-Triebwerksgondel (10), die mit einem Umkehrer (18) nach einem der vorstehenden Ansprüche ausgestattet ist.

## Claims

1. A thrust reverser (18) for a nacelle (10) of an aircraft turbojet engine comprising at least:
- a thrust reverser cowl (20) movable in translation along a direction substantially parallel to a longitudinal axis (A) of the nacelle (10), between a direct jet position and a reverse jet position, the cowl (20) being associated to a locking means allowing to immobilize the cowl (20) in its direct jet position,
- a variable-section outlet nozzle (22) which is arranged in the downstream extension of said cowl (20) and which is movable between at least one reduced ejection section position, an increased ejection section position and an intermediate neutral position, and
- at least one actuator (24) which comprises a body (26) mounted on a fixed structure of the thrust reverser (18) and an actuating rod (28), said rod (28) being adapted to drive in displacement the variable nozzle (22) and the movable cowl (20), **characterized in that** the thrust reverser (18) is equipped with an elastic coupler (30) including:
- a body (32) which is secured to the thrust reverser cowl (20), and
- elastic return (48) and stop means which are carried by the body (32) of the coupler (30) and which cooperate with the actuating rod (28) of the actuator (24) in order to elastically return the nozzle (22) in its neutral position, said return means (48) being calibrated so that, when the cowl (20) is unlocked, the return (48) and stop means oppose the relative displacement of the actuating rod (28) relative to the cowl (20) in order to enable the driving in displacement of the set constituted by the cowl (20) and the nozzle (22), and when the cowl (20) is locked, the actuator (24) drives the actuating rod (28) against the return (48) and stop means in order to enable the driving in displacement of the nozzle (22).

2. The thrust reverser (18) according to claim 1, **characterized in that** the elastic return (48) and stop means are calibrated so that the neutral position of the nozzle (22) is substantially invariable, whether the cowl (20) is locked on the fixed structure of the thrust reverser (18) or unlocked.

3. The thrust reverser (18) according to any one of the preceding claims, **characterized in that** the coupler (30) includes:
- a cavity (34) which is formed by the body (32) of the coupler (30), which has a hollow shape extending axially generally along the axis (B) of the actuating rod (28) and which is delimited radially by a radial upstream wall (36) and by a radial downstream wall (38),
- a piston (42) which is fastened on the actuating rod (28) of the actuator (24) and which is slidably mounted in the body (32) of the coupler (30) by dividing said cavity (34) into a first compartment (44) and a second compartment (46),
- a first spring (50) and a second spring (52), forming said elastic return (48) and stop means, which are interposed axially between the upstream wall (36) of the body (32) and the piston (42), and between the downstream wall (38) and the piston (42) respectively.

4. The thrust reverser (18) according to any one of the preceding claims, **characterized in that** it includes damping means (58) designed to limit the jerks transmitted to the cowl (20) and to the nozzle (22) during the unlocking of the cowl (20).

5. The thrust reverser (18) according to claim 4, **characterized in that** the damping means (58) include a damping fluid which fills the cavity (34) of the body (32) of the coupler (30), the piston (42) of the coupler (30) having a channel (60) enabling the damping fluid to circulate between the first compartment (44) and the second compartment (46) of the cavity (34) during the displacement of the piston (42), in order to dampen the displacement of the actuating rod (28).

6. The thrust reverser (18) according to any one of claims 4 and 5, **characterized in that** the damping means (58) are designed to have a time constant close to the duration necessary to make the nozzle (22) switch from its reduced ejection section position to its increased ejection section position, said constant being longer than the duration of deployment of the movable cowl (20) of the thrust reverser (18).

7. The thrust reverser (18) according to claim 3, **characterized in that** the actuating rod (28) includes a first segment (62) which is slidably mounted in the body (26) of the actuator (24) and a second segment (64) which carries the piston (42) of the coupler (30), said segments being linked together by a mechanical linkage (66) enabling a substantial offset of the first segment (62) and of the second segment (64) from the actuating rod (28).

8. The thrust reverser (18) according to claim 7, **characterized in that** the mechanical linkage (66) is designed to enable an uncoupling of the first segment (62) and of the second segment (64) from the actuating rod (28).

9. The thrust reverser (18) according to any one of claims 7 and 8, **characterized in that** the mechanical linkage (66) includes a head (68) with an elliptical section which is linked on a free end of the first segment (62) of the rod (28), and a U-shaped attachment (70) which is linked on a free end of the second segment (64) of the rod (28) and which cooperates with said associated head (68) in order to enable a relative displacement of the head (68) and of the attachment (70) and to enable an uncoupling of the first segment (62) and of the second segment (64) from the actuating rod (28).

10. A nacelle (10) of an aircraft turbojet engine equipped with a thrust reverser (18) according to any one of the preceding claims.
